# EUROPEAN PATENT SPECIFICATION

(11) **EP 3 565 070 B1**
(45) Date of publication and mention of the grant of the patent: **15.12.2021**
(21) Application number: 16925303.6
(22) Date of filing: 27.12.2016
(51) Int. Cl.: H02B 1/20, H02B 1/36

(54) **CONTROL CENTER**
STEUERZENTRALE
CENTRE DE COMMANDE

(43) Date of publication of application: 06.11.2019
(73) Proprietor: Mitsubishi Electric Corporation, Chiyoda-ku Tokyo 100-8310 (JP)
(72) Inventor: OHARA, Masato, Tokyo 100-8310 (JP)
(74) Representative: Witte, Weller & Partner Patentanwälte mbB
(86) International application number: PCT/JP2016/088819
(87) International publication number: WO 2018/122941

(56) References cited:
- JP-A- H0 951 607
- JP-A- S5 469 738
- JP-A- S59 222 003
- JP-A- 2008 289 230
- JP-A- 2010 183 717
- JP-A- 2012 095 530
- JP-U- S5 827 987
- JP-U- S5 827 987
- JP-U- S53 156 022
- US-A- 4 602 313
- US-A1- 2012 111 598

## Description

### TECHNICAL FIELD

The present invention relates to a control center which is provided with a plurality of functional units that will be connected to an external device with cables.

### BACKGROUND ART

In relevance to the above mentioned control center, installations which are described in the following Patent Document 1 and Patent Document 2 are known. In the technology of Patent Document 1, next to vacuum circuit breakers 2A to 2D which are disposed on a plurality of stages, there is provided a cable wiring space for wiring cables 4A to 4D, which are to be connected to the vacuum circuit breakers 2A to 2D. Within the cable wiring space, the cables 4A to 4D are connected to cable connection boxes 5A to 5D, which are provided for connecting with the vacuum circuit breakers 2A to 2D, and moreover, are supported with a plurality of cable supports 8 and extend in an up and down direction.

In the technology of Patent Document 2, next to electrical appliances 12 which are disposed on a plurality of stages, there is provided a cable wiring space for wiring cables 20, which are to be connected to the electrical appliances 12. Within the cable wiring space, the cables 20 are supported with a plurality of cable supports 25 and extend in the up and down direction.

Patent Document 3, according to its abstract, states a power control apparatus for distributing power to electrical loads. The apparatus contains in a casing a plurality of vertically arranged control units. In the casing, there are provided bus conductors for power source to feed electric power to each of the control units, a vertical control bus device comprising a plurality of control bus conductors each having connecting points for each of the control units, and branch lines which connect each of the connecting points in the control bus conductors with the corresponding control units to form a control circuit for cross-wiring. The construction of the power control apparatus enables easy wiring operations for the control units.

Patent Document 4, according to its abstract, states a cable bus system for the mounting and positioning of high amperature, from low to high voltage electrical power cables transmitting polyphase electrical current. The cable bus system included a ventilated enclosure used to protect electrical cables mounted therein. The enclosure is provided with multiple modular cable trays which are bolted together in a stacked arrangement to form a single multi-level cable raceway. The enclosure is further provide with ventilated top and bottom covers which are secured respectively to the top and bottom of the uppermost and bottommost calve trays to define the enclosed metal circuit. The cable bus system is capable of transmitting the same highest allowable "free air" cable amperature in both above and underground installations, effectively improving the transmission of electrical power from one end to the other end in installations where a transition of electrical power from on the ground is either necessary or economically preferable. For the underground portion, the cable bus is installed in the encasement that is uniquely offset vented or power cooled to meet the cable high amperage requirements. This cable bus system is also suitable for high vertical rise installations when utilizing anti cable slip mechanism or technique.

### CITATION LIST

### Patent Literature

Patent Document 1 : Japanese Patent Application Publication No. H9 - 51607
Patent Document 2: Japanese Patent Application Publication No. S60 ― 13364
Patent Document 3: US 4 602 313 A
Patent Document 4: US 2012/111598 A1

### SUMMARY OF THE INVENTION

### Technical Problem

In recent years, functional units which will be mounted in a control center are reduced in size, and mounting more functional units in the control center can be attained. On another front, because external connection cables which are to be connected to the functional unit have increased in number, increase in the size of wiring space for the external connection cables will lead to a problem. In addition, there is also a simple demand for the downsizing of a control center. So, in order to achieve the downsizing of the control center, required is a cable supporting structure, which can dispose more external connection cables in a limited wiring space and can support the cables in an efficient way.

In the technology of Patent Document 1, however, one cable support 8 is configured to support a single cable, and the one cable support 8 is not configured to support a plurality of cables all together. Further, although a plurality of cables, which are connected to two vacuum circuit breakers provided on an upper stage and a lower stage, are arranged in a line on the lower part side thereof, only half of the cables are supported with the cable support 8 at the same height and not all of the cables are supported. This seems to be due to the fact that, cables, which are connected to one of the vacuum circuit breakers, are disposed between the cables which are connected to the other of the vacuum circuit breakers. Furthermore, in the technology of Patent Document 1, a plurality of cables, which are arranged in a line, are limited to the cables which will be connected to the two vacuum circuit breakers provided on the upper and lower stages. Consequently, according to the technology of Patent Document 1, it is not easy to dispose more cables in a limited wiring space and support the cables in an efficient way.

In the technology of Patent Document 2, one cable support 25 is configured to support three cables, which are connected to an electrical appliance 12 provided on each of the stages and tied up together to form a bundle, and this one cable support 25 is not configured to support a plurality of bundles of cables all together. Further, in the technology of Patent Document 2, a plurality of cable supports 25 are disposed on one flat surface, and there seems to be a limit on the number of cable supports 25 and the number of cables, which can be disposed thereon. Therefore, according to the technology of Patent Document 2, it is not easy to dispose more cables in a limited wiring space and support them in an efficient way.

In that situation, a control center is required to have a cable supporting structure, which can dispose more external connection cables in a limited wiring space and can support them in an efficient way.

### Solution to Problem

Therefore, there are provided a control center according to claim 1 and a control center according to claim 2.

### Advantage of the Invention

According to the control center in relevance to the present application, a plurality of external connection cables which are arranged in a line can be supported with the rod like supporting portion in an efficient way. Furthermore, external connection cables can be disposed on a plurality of rows, and the external connection cables on each row can be supported with the corresponding kind of rod like supporting portion in an efficient way. Accordingly, it is possible to arrange more external connection cables in a limited empty space and support them in an efficient way. Further, because respective kinds of rod like supporting portions are provided in plural and disposed, with keeping a space in between, in an up and down direction, a plurality of external connection cables, which extend in the up and down direction, can be supported in a stable manner with the respective kinds of rod like supporting portions which are distributed and disposed in the up and down direction.

### BRIEF DESCRIPTION OF THE DRAWINGS

FIG. 1 is a front view of a control center according to Embodiment 1 of the present invention, where the control center is viewed from the front face side;
FIG. 2 is a cross sectional drawing of the control center, which is cut in the A - A cross sectional position of FIG. 1 and viewed on the left hand side thereof;
FIG. 3 is a cross sectional drawing of the control center, which is cut in the B - B cross sectional position of FIG. 1 and viewed on the lower part side thereof;
FIG. 4 is an enlarged drawing of a principal part, where the X portion in FIG. 3 is magnified;
FIG.5 is a perspective view of a first type of cable supporting member according to Embodiment 1 of the present invention;
FIG.6 is a perspective view of a second type of cable supporting member according to Embodiment 1 of the present invention;
FIG.7 is an enlarged drawing of a principal part in the control center according to the variation mode of Embodiment 1 of the present invention;
FIG.8 is an enlarged drawing of a principal part in the control center according to the variation mode of Embodiment 1 of the present invention;
FIG.9 is an enlarged drawing of a principal part in the control center according to the variation mode of Embodiment 1 of the present invention;
FIG. 10 is a front view of a control center according to Embodiment 2 which does not disclose all features of the present invention, where the control center is viewed from the front face side;
FIG. 11 is a cross sectional drawing of the control center, which is cut in the C - C cross sectional position of FIG. 10 and viewed on the left hand side thereof;
FIG. 12 is a cross sectional drawing of the control center, which is cut in the D - D cross sectional position of FIG. 10 and viewed on the lower part side thereof;
FIG. 13 is an enlarged drawing of a principal part, where the Y portion in FIG. 12 is magnified;
FIG.14 is a perspective view of a cable supporting member according to Embodiment 2 which is not covered by the present invention;
FIG. 15 is an enlarged drawing of a principal part in the control center according to Embodiment 3 of the present invention;
FIG. 16 is a perspective view of a cable supporting member according to Embodiment 3 of the present invention, where the cable supporting member is in an assembled state;
FIG. 17 is a perspective view of a cable supporting member according to Embodiment 3 of the present invention, where the cable supporting member is in a disassembled state;
FIG. 18 is a front view of a control center according to Comparative Example of the present invention, where the control center is viewed from the front face side;
FIG. 19 is a cross sectional drawing of the control center, which is cut in the E - E cross sectional position of FIG. 18 and viewed on the left hand side thereof;
FIG. 20 is a cross sectional drawing of the control center, which is cut in the F - F cross sectional position of FIG.18 and viewed on the lower part side thereof;
FIG. 21 is an enlarged drawing of a principal part, where the Z portion in FIG. 20 is magnified.

### DESCRIPTION OF EMBODIMENTS

### 1. Embodiment 1

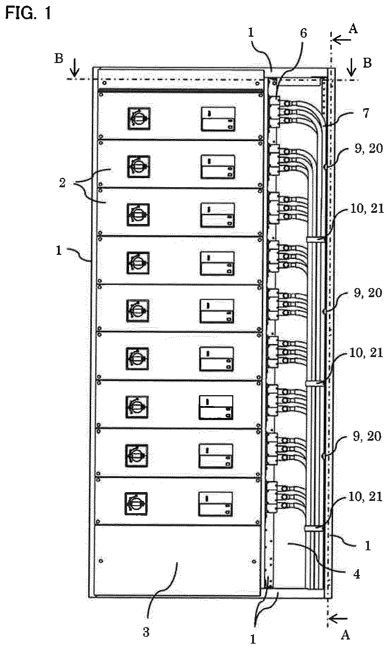

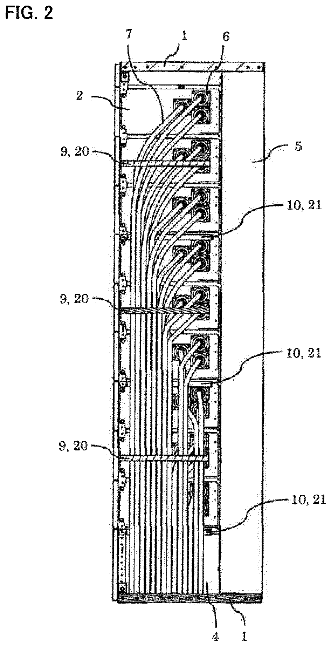

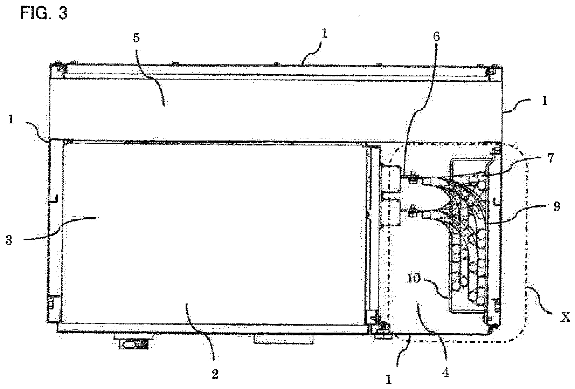

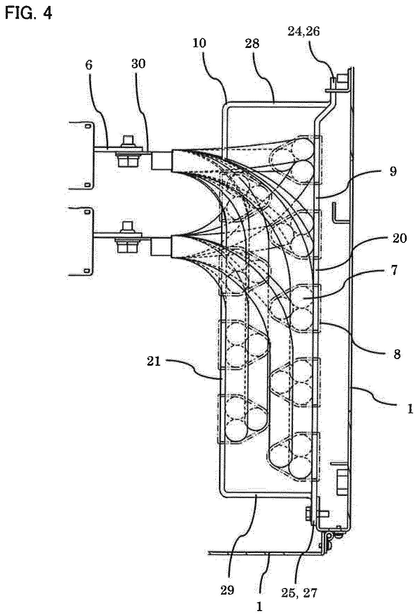

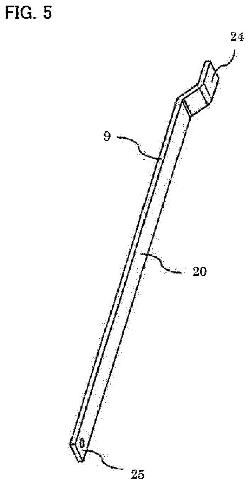

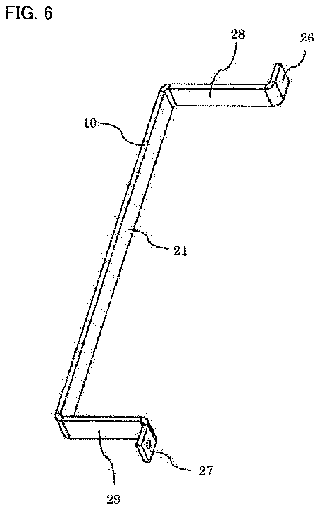

Explanation about a control center according to Embodiment 1 will be made with reference to drawings. FIG. 1 is a front view of the control center which is viewed from the front face side; FIG. 2 is a cross sectional drawing of FIG. 1, where the control center is cut in the A - A cross sectional position of FIG. 1 and viewed in a horizontal direction ( on a left hand side ); an FIG. 3 is a cross sectional drawing of FIG. 1, where the control center is cut in the B - B cross sectional position of FIG. 1 and viewed in an up and down direction ( on a lower part side). FIG. 4 is an enlarged drawing of a principal part, where the X portion in FIG. 3 is magnified. FIG. 5 is a perspective view of a first type of cable supporting member 9, and FIG. 6 is a perspective view of a second type of cable supporting member 10. Here, right and left are defined as the right and the left of the control center, when the control center is viewed from a main part side ( a front face side).

The control center is provided with a frame 1 which supports each of the component parts in the control center. In the present embodiment, the control center is supposed to be rectangular solid like in outer shape. The frame 1 is supposed to be frame members, such as angle bars and square pipes, which constitute respective sides of the rectangular solid, supporting portions of respective functional units 2, and the like.

The control center is provided with a plurality of functional units 2 (in the present case, nine units ). The plurality of functional units 2 are disposed on a plurality of stages ( in the present case, nine stages ) in the up and down direction, and are fixed to the frame 1. In the present embodiment, respective functional units 2 are supposed to have the same rectangular solid like form in external shape, and are arranged in a line in the up and down direction. The disposition space 3 for a plurality of functional units 2 forms, as a whole, an empty space of rectangular solid like shape, which is long in an up and down direction, and respective sides of the empty space are parallel in a back and forth direction, a right and left direction, or an up and down direction. Electric power switches, control panels, and the like, are provided on a face of the main part side (the front face side) of the respective functional units 2. Each of the functional units 2 is a control device for supervising and controlling an external device. The external device is, for example, supposed to be an electric installation, such as a plant, a society's infrastructure, and the like. The control center intensively supervises and controls each of the electric installations, such as a plant, a society's infrastructure, and the like. In the present embodiment, the external device is supposed to be a three-phase alternating current motor, and the functional unit 2 is provided with an inverter, a vacuum circuit breaker, and the like, which perform drive controlling of the three-phase alternating current motor. The control center intensively supervises and controls a plurality of three-phase alternating current motors.

The control center is provided with a plurality of external connection cables 7 which connect each of the plurality of functional units 2 with an external device. The plurality of external connection cables 7 extend, within the control center, in the up and down direction. In the present embodiment, a connection terminal 6 is provided on the side face ( in the present case, the right face) of respective functional units 2. The external connection cable 7 is provided with a connection terminal 30 which will be connected to the connection terminal 6 of the functional unit 2 ( refer to FIG. 4 ), and extends, within the control center, in the lower part side, after extending from the connection terminal 30 to the lateral side ( in the present case, the right hand side ). Further, after extending in the lower part side of the control center, the external connection cable 7 will pass through an under floor space and the like in a building, and will be connected to an external device. It is to be noted that the external connection cable 7, after extending from the connection terminal 6 in each of the functional units 2 to the lateral side, is allowed to extend, within the control center, in the upper side. Furthermore, the external connection cable 7 is allowed to pass through the ceiling side of the building and connected to an external device, after extending in the upper side of the control center.

The three-phase alternating current motor is supposed to be of three-phase and three-wire type, and respective terminals of a three-phase coil and an inverter will be connected with three external connection cables 7. Each of the functional units 2 is provided with three connection terminals 6. The three external connection cables 7 are provided for each of the functional units 2. As shown in FIG. 4, the three external connection cables 7, which will be connected to each of the functional units 2, are tied up all together by cable binding members 8, such as nylon binders, to make a bundle like entity, and are fixed to a cable supporting structure.

In the present embodiment, the wiring space 4 of external connection cables 7, which is provided, within the control center, on the right hand side of the disposition space 3 for the functional unit 2, when viewed from the main part side ( the front face side ), forms an empty space of rectangular solid like shape, which is long in the up and down direction. Respective sides of the empty space are parallel, in the back and forth direction, the right and left direction, or the up and down direction. It is to be noted that the wiring space 4 of the external connection cables 7 is allowed to be provided on the left hand side, the rear face side, or the front face side, of the disposition space for the functional unit 2, when viewed from the main part face. That is to say, the wiring space 4 of the external connection cables 7 can be provided on any of the sides, as long as the empty space extends in the up and down direction along the lateral side of the disposition space 3 for the functional unit 2.

In the present embodiment, within the control center, a bus line space 5, which stores bus lines for supplying electric power to the respective functional units 2 and is of rectangular solid like shape, is provided on rear face sides of the disposition space 3 for functional units 2 and the wiring space 4 for external connection cables 7.

The control center is provided with a cable supporting structure which supports external connection cables 7. The cable supporting structure is fixed to the frame 1.

### < Cable supporting structure of Comparative Example >

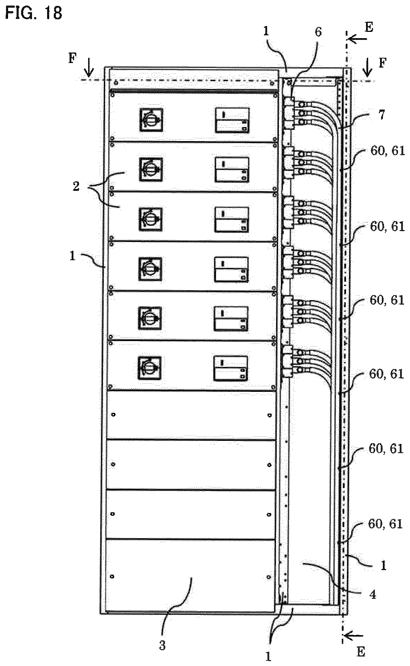

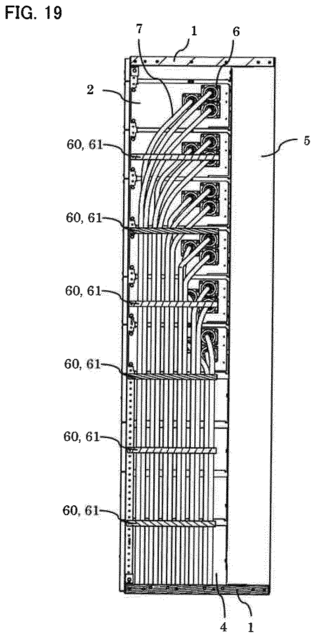

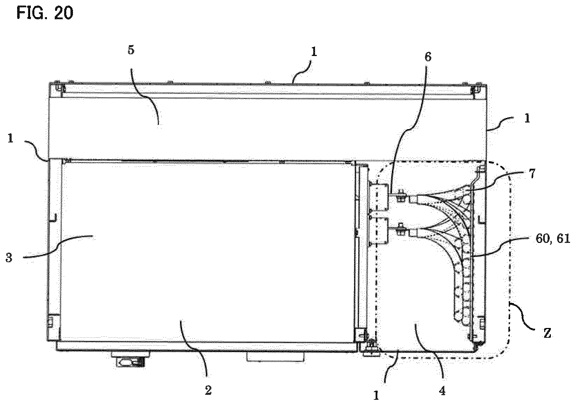

Here, explanation will be made about a cable supporting structure according to the comparative example, which is different from the present embodiment. A control center in relevance to the comparative example is shown in FIG. 18 to FIG. 21. The cable supporting structure according to the comparative example is composed of one kind of cable supporting member 61, which has one kind of rod like supporting portion 60, where the rod like supporting portion supports external connection cables 7 on the same row. The one kind of rod like supporting portions 60 ( cable supporting members 61 ), which are provided in plural, are disposed, with keeping a space in between, in the up and down direction.

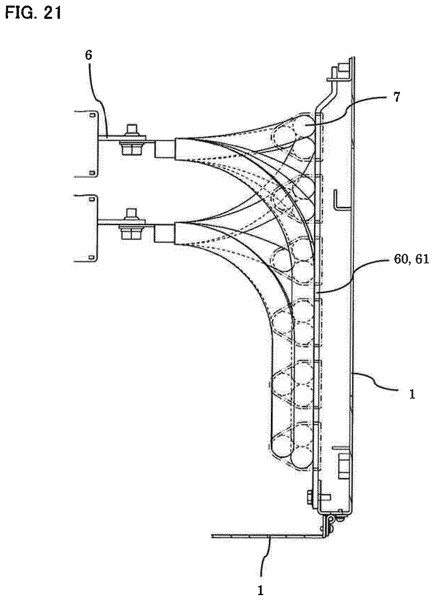

In the cable supporting structure according to the comparative example, however, as shown in FIG. 21, the number of external connection cables 7 which can be disposed in the wiring space 4 is restricted, because external connection cables 7 are at most arranged in a line and supported, along the one kind of rod like supporting portion 60 ( cable supporting member 61 ). Further, even if the functional unit 2 is reduced in size, downsizing of the wiring space 4 is difficult to perform with the unit size reduction, and it is not easy to attain the downsizing of the entire installation. In those situations, through the efficient use of the wiring space 4, a cable supporting structure, which can dispose more external connection cables 7 and support them, is required.

### < Cable supporting structure of Present Embodiment >

So, in the present embodiment, the cable supporting structure has a rod like supporting portion of rod like shape, which extends in the horizontal direction and supports a plurality of external connection cables 7 that are arranged in a line in the horizontal direction, with keeping parallel state each other. Further, the rod like supporting portion is composed of plural kinds of rod like supporting portion, which support external connection cables 7 on different rows, and respective kinds of rod like supporting portions, which are provided in plural, are disposed, with keeping a space in between, in the up and down direction. In the present embodiment, the cable supporting structure is composed of two kinds of rod like supporting portion, a first type of rod like supporting portion 20 which supports the external connection cables 7 on a first row, and a second type of rod like supporting portion 21 which supports the external connection cables 7 on a second row. The first type of rod like supporting portions 20 and the second type of rod like supporting portions 21, which are provided in plural, are both disposed, with keeping a space in between, in the up and down direction.

According to the configurations mentioned above, the rod like supporting portion can support, in an efficient way, a plurality of external connection cables 7 which are arranged in a line. In addition, external connection cables 7 can be disposed on a plurality of rows, and external connection cables 7 on each row can be supported with a corresponding kind of rod like supporting portion in an efficient way. Accordingly, it is possible to arrange more external connection cables 7 in a limited empty space and support them in an efficient way. Further, as respective kinds of rod like supporting portions, which are provided in plural, are disposed, with keeping a space in between, in the up and down direction, a plurality of external connection cables 7 which extend in the up and down direction can be supported in a stable manner with the respective kinds of rod like supporting portions which are distributed and disposed in the up and down direction.

The cable supporting structure is composed of plural kinds of cable supporting member which have one by one a kind of rod like supporting portion, and respective kinds of cable supporting members, which are provided in plural, are disposed alternately, with keeping a space in between, in the up and down direction. In the present embodiment, the cable supporting structure is composed of two kinds of cable supporting members, a first type of cable supporting member 9 which has a first type of rod like supporting portion 20 and a second type of cable supporting member 10 which has a second type of rod like supporting portion 21. The first type of cable supporting members 9 and the second type of cable supporting members 10, which are both provided in plural (in the present case, three members in each type ), are disposed alternately ( rolling gait manner, zigzag manner), with keeping a space in between, in the up and down direction.

According to the configurations mentioned above, by preparing plural kinds of cable supporting member which have one by one a kind of rod like supporting portion, respective cable supporting members can be simplified in shape and reduction in the cost and facilitation in the assembling of the installation can be attained. Further, since respective kinds of cable supporting member are disposed alternately in the up and down direction, a plurality of rod like supporting members, which are distributed in the up and down direction, can attain the support of external connection cables 7 in a stable manner, with regard to a row of external connection cables which the respective kinds of cable supporting member support.

It is to be noted that respective kinds of cable supporting members can be provided in an arbitrary number, in accordance with the height and the like of a control center.

When viewed in the up and down direction, respective kinds of rod like supporting portion are disposed so that they can keep a space in between in the horizontal direction and can become parallel. When viewed in the up and down direction, a row of external connection cables 7 which one of the two neighboring rod like supporting portions supports and a row of external connection cables 7 which the other of the two neighboring rod like supporting portions supports are disposed in an empty space which is formed between the two neighboring rod like supporting portions.

In the present embodiment, as shown in FIG. 4, the first type of rod like supporting portion 20 and the second type of rod like supporting portion 21 are disposed, when viewed in the up and down direction, so that they can keep a space in between in the horizontal direction and can become parallel. Accordingly, when viewed in the up and down direction, external connection cables 7 on the first row which the first type of rod like supporting portion 20 supports and external connection cables 7 on the second row which the second type of rod like supporting portion 21 supports are disposed in an empty space which is formed between the first type of rod like supporting portion 20 and the second type of rod like supporting portion 21.

According to the configurations mentioned above, the external connection cables 7 on the two rows are disposed together in an empty space which is formed between two neighboring rod like supporting portions which are to be disposed in parallel, when viewed in the up and down direction, and the two neighboring rod like supporting portions can support the cables in a stable manner from the both sides thereof.

External connection cables 7 on the row which one of the neighboring rod like supporting portions supports and external connection cables 7 on the row which the other of the neighboring rod like supporting portions supports are disposed alternately ( rolling gait manner, zigzag manner), with keeping a space in between, in an extending direction of the rod like supporting portion, when viewed in the up and down direction.

In the present embodiment, when viewed in the up and down direction, the first type of rod like supporting portion 20 supports, on a second type of rod like supporting portion 21 side, a plurality of external connection cables 7 ( in the present case, five bundles of cables ), which are kept in parallel state each other and are arranged in a line, with keeping a space in between, in the extending direction of the first type of rod like supporting portion 20. When viewed in the up and down direction, the second type of rod like supporting portion 21 supports, on a first type of rod like supporting portion 20 side, a plurality of external connection cables 7 ( in the present case, four bundles of cables), which are kept in parallel state each other and are arranged in a line, with keeping a space in between, in the extending direction of the second type of rod like supporting portion 21. When viewed in the up and down direction, the external connection cables 7 on the first row which the first type of rod like supporting portion 20 supports and the external connection cables 7 on the second row which the second type of rod like supporting portion 21 supports are disposed alternately ( rolling gait manner, zigzag manner ), with keeping a space in between, in the extending directions of the first type of rod like supporting portion 20 and the second type of rod like supporting portion 21.

According to the configurations mentioned above, it is possible to dispose more external connection cables 7 in an empty space formed between the two rod like supporting portions, while mutual spaces among the external connection cables 7 are secured, the rise in temperature of the external connection cables 7 is suppressed, and the power loss is suppressed.

The external connection cables 7 are arranged in a line by the bundle unit of external connection cables 7 and supported with the rod like supporting portion, where a plurality of external connection cables 7, which are to be connected to each of the functional units 2, are bound together to form a bundle of external connection cables 7. In the present embodiment, as mentioned above, the external connection cables 7 are arranged in a line by the bundle unit of external connection cables 7 and supported with the rod like supporting portion, where three external connection cables 7, which connect the inverter in one functional unit 2 and the three-phase coil of one three-phase alternating current motor, are bound together to form a bundle of external connection cables 7. That is to say, a plurality of bundles, each containing three cables, are kept in parallel state each other and are arranged in a line, with keeping a space in between, when viewed in the up and down direction. Respective three cables, which are, as mentioned above, bound together with cable binding members 8, such as nylon binders, are fixed to the first type of rod like supporting portion 20 or the second type of rod like supporting portion 21.

It is to be noted that the number of external connection cables 7 ( bundles of external connection cables 7 ) which are disposed on each of the rows can be selected from an arbitrary number, depending on the size of the dispositional empty space, the diameter of the external connection cable 7, and others.

The first type of rod like supporting portion 20 and the second type of rod like supporting portion 21 are, when viewed in the up and down direction, disposed to follow the order of closeness to the functional unit 2, in such a way that a portion first closest to the functional unit 2 is assigned to the second type of rod like supporting portion 21 and a portion second closest to the functional unit 2 is assigned to the first type of rod like supporting portion 20. In the present embodiment, the second type of rod like supporting portion 21 is disposed, with keeping a space in between, on the right hand side of the functional unit 2 and is disposed to be parallel in the back and forth direction. The first type of rod like supporting portion 20 is disposed, with keeping a space in between, on the right hand side of the second type of rod like supporting portion 21 and is disposed to be parallel in the back and forth direction.

As shown in FIG. 4 and FIG. 5, a first type of cable supporting member 9 is provided with two frame fixing portions 24 and 25 on the both ends thereof. The two frame fixing portions 24 and 25 are fixed to the right hand portion of the frame 1, which corresponds to a right end portion of the disposition space 3 for the functional unit 2. The frame fixing portion 24 of the rear face side is inserted in a hole which is formed in the frame 1. The frame fixing portion 25 of the front face side is fixed to the frame 1 with a bolt stop screw. The first type of rod like supporting portion 20 is defined as a part which extends in the back and forth direction, between the two frame fixing portions 24 and 25.

As shown in FIG. 4 and FIG. 6, the second type of cable supporting member 10 is provided with two frame fixing portions 26 and 27 on the both ends thereof. The two frame fixing portions 26 and 27 of the second type of cable supporting member 10 are disposed in a position so as to overlap respectively with the two frame fixing portions 24 and 25 of the first type of cable supporting member 9, when viewed in the up and down direction. The frame fixing portion 26 of the rear face side is inserted into a hole which is formed in the frame 1. The frame fixing portion 27 of the front face side is fixed to the frame 1 with a bolt stop screw. The second type of cable supporting member 10 is provided with two rod like extension portions 28 and 29, which extend respectively from the two frame fixing portions 26 and 27 to the functional unit 2 side ( the left hand side ). The second type of rod like supporting portion 21 is defined as a part which extends in the back and forth direction, between the left hand ends of the two extension portions 28 and 29. That is to say, the second type of cable supporting member 10 is formed to have an angulated U like shape.

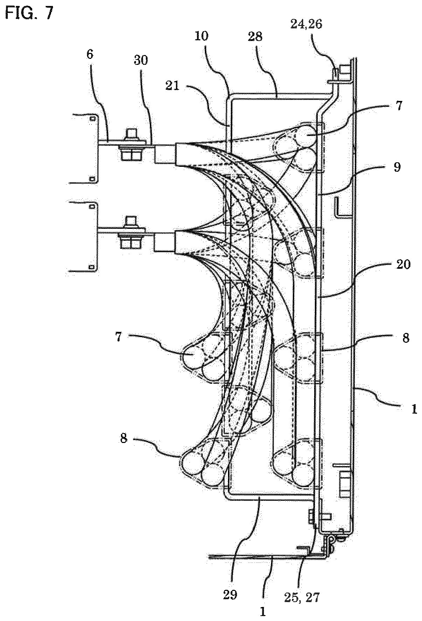

Or, when viewed in the up and down direction, external connection cables on a row which the rod like supporting portion supports on one side thereof and external connection cables on a row which the rod like supporting portion supports on the other side thereof can be alternately disposed in the extending direction of the rod like supporting portion, where the rod like supporting portion supports different rows of the external connection cables 7 on both sides thereof. For example, as is shown in FIG. 7, instead of FIG. 4, the second type of rod like supporting portion 21 can be configured to support, on the opposite side of the first type of rod like supporting portion 20 ( on the functional unit 2 side ), a plurality of external connection cables 7 ( in the present case, two bundles of cables), which are kept in parallel state each other and are arranged, with keeping a space in between, in a line, in the extending direction of the second type of rod like supporting portion 21, when viewed in the up and down direction. External connection cables 7 on a second row which the second type of rod like supporting portion 21 supports on the first type of rod like supporting portion 20 side, and external connection cables 7 on a third row which the second type of rod like supporting portion 21 supports on the opposite side of the first type of rod like supporting portion 20 are allowed to be disposed alternately ( rolling gait manner, zigzag manner) in the extending direction of the second type of rod like supporting portion 21, when viewed in the up and down direction. According to the configurations mentioned above, it becomes possible to expand spaces among the external connection cables 7, or to arrange more external connection cables 7.

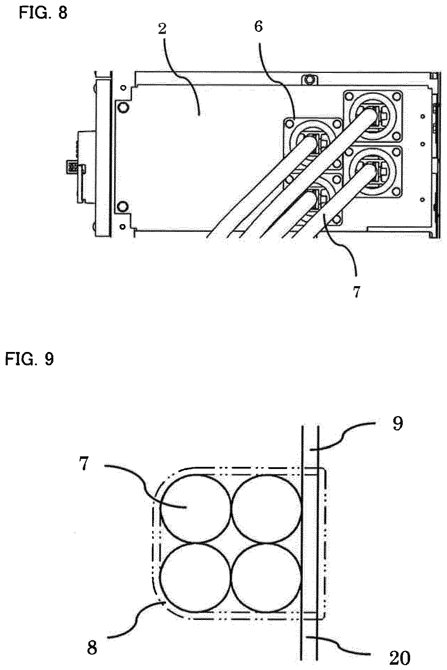

Further, it is allowed that each of the functional units 2 is provided with connection terminals 6 of a number other than three, and external connection cables 7 of the number other than three are connected to each of the functional units 2. Furthermore, external connection cables 7 of a number other than three, which are bound to form a bundle of cables, can be fixed to the cable supporting structure. For example, as shown in FIG. 8 and FIG. 9, it is allowed that the functional unit 2 is configured to control an alternative current motor of three-phase and four-wire type, and each of the functional units 2 is provided with four connection terminals 6, and four external connection cables 7 can be connected to each of the functional units 2. Further, four external connection cables 7, which are bound to form a bundle of cables, can be fixed to the cable supporting structure.

### 2. Embodiment 2 (not part of the present invention)

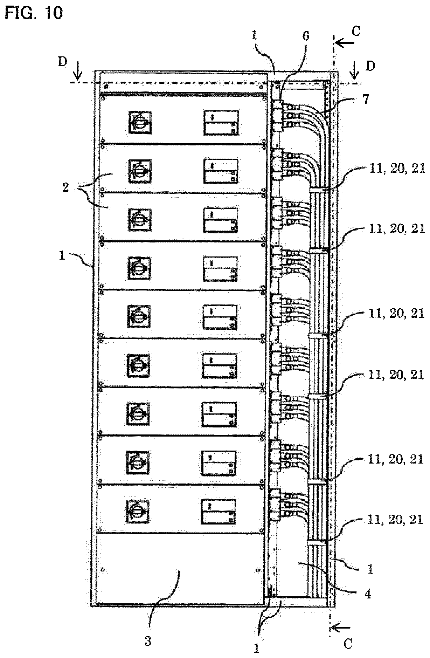

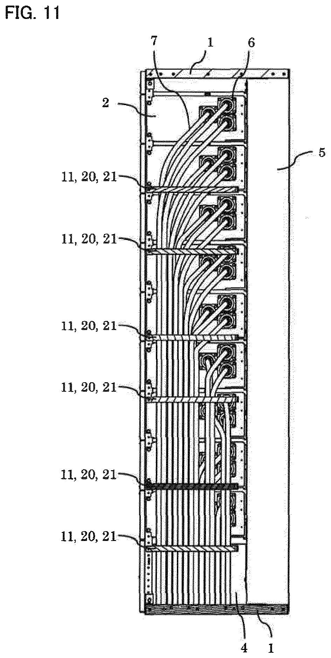

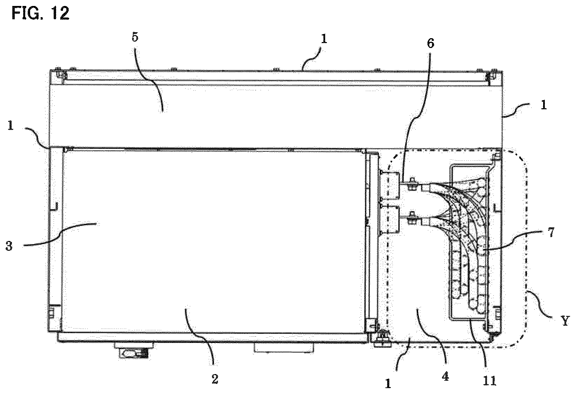

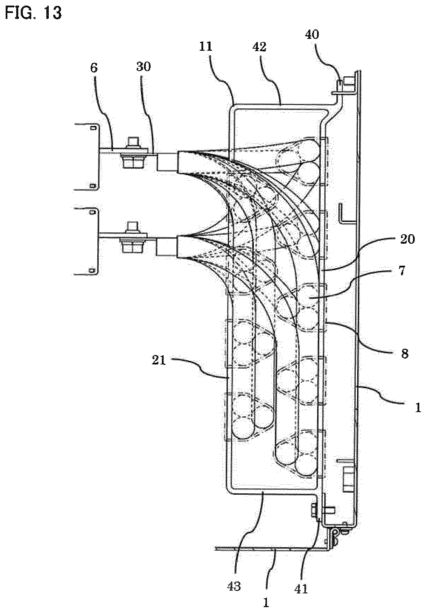

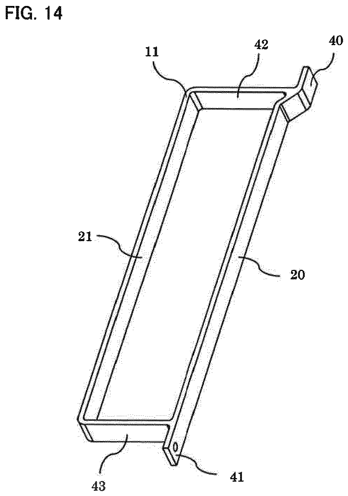

Next, explanation about a control center according to Embodiment 2 will be made with reference to drawings. FIG. 10 is a front view of a control center, where the control center is viewed from the front face side; FIG. 11 is a section drawing of the control center, where the control center is cut at the C - C cross sectional position of FIG. 10 and viewed in the horizontal direction (the left hand side); and FIG. 12 is a section drawing of the control center, where the control center is cut at the D - D cross sectional position of FIG. 10 and viewed in the up and down direction ( the lower part side ). FIG. 13 is an enlarged drawing of the principal part, where the Y portion in FIG. 12 is magnified. FIG. 14 is a perspective view of the cable supporting member 11.

The description of constituent parts which are identical to or similar with those in Embodiment 1 will be omitted. Although basic configurations of the control center according to the present embodiment are the same with those of Embodiment 1, the configuration of a cable supporting member differs from that of Embodiment 1.

That is to say, in the present embodiment, the cable supporting structure is composed of one kind of cable supporting member 11, which has all kinds of rod like supporting portion, and the cable supporting members 11, which are provided in plural, are disposed, with keeping a space in between, in the up and down direction. In the present case, the cable supporting member 11 has a first type of rod like supporting portion 20 and a second type of rod like supporting portion 21.

According to the configurations mentioned above, one kind of cable supporting member 11 is enough to prepare, and reduction in the cost of the installation and simplification in the assembling can be attained. Further, since the cable supporting members 11 are disposed, with keeping a space in between, in the up and down direction, respective external connection cables 7 can be supported in a stable manner at a plurality of positions which are distributed in the up and down direction.

As shown in FIG. 13 and FIG. 14, the first type of rod like supporting portion 20 and the second type of rod like supporting portion 21 are disposed in such a way that they can become parallel, with keeping a space in between, in the horizontal direction.

The cable supporting member 11 is provided with two frame fixing portions 40 and 41 on the both ends thereof. The two frame fixing portions 40 and 41 are fixed to the right hand portion of the frame 1, which corresponds to a right end portion of the disposition space 3 for the functional unit 2. The frame fixing portion 40 on the rear face side is inserted into a hole which is formed in the frame 1. The frame fixing portion 41 on the front face side is fixed to the frame 1 with a bolt stop screw. The first type of rod like supporting portion 20 is defined as a part which extends in the back and forth direction, between the two frame fixing portions 40 and 41.

The cable supporting member 11 is provided with two rod like extension portions 42 and 43 which extend respectively from the two frame fixing portions 40 and 41 to the functional unit 2 side ( the left hand side). The second type of rod like supporting portion 21 is supposed to be a part which extends in the back and forth direction, between the left ends of the two extension portions 42 and 43. The cable supporting member 11 is formed to have a rectangular tubed shape. The cable supporting member 11 is supposed to be a single piece member.

The external connection cables 7 on the first row which the first type of rod like supporting portion 20 supports and the external connection cables 7 on the second row which the second type of rod like supporting portion 21 supports are disposed in an empty space formed between the first type of rod like supporting portion 20 and the second type of rod like supporting portion 21.

Like in Embodiment 1, the first type of rod like supporting portion 20 supports, on the second type of rod like supporting portion 21 side, a plurality of external connection cables 7 (in the present case, five bundles of cables ), which are kept in parallel state each other and are arranged in a line, with keeping a space in between, in the extending direction of the first type of rod like supporting portion 20, when viewed in the up and down direction. The second type of rod like supporting portion 21 supports, on the first type of rod like supporting portion 20 side, external connection cables 7 ( in the present case, four bundles of cables ), which are kept in parallel state each other and are arranged in a line, in the extending direction of the second type of rod like supporting portion 21. When viewed in the up and down direction. The external connection cables 7 on the first row which the first type of rod like supporting portion 20 supports and the external connection cables 7 on the second row which the second type of rod like supporting portion 21 supports are disposed alternately ( rolling gait manner, zigzag manner ), with keeping a space in between, in the extending direction of the first type of rod like supporting portion 20 and the second type of rod like supporting portion 21, when viewed in the up and down direction.

Like in Embodiment 1, the external connection cables 7 are disposed by the bundle unit of external connection cables 7, where a bundle is formed of three external connection cables 7 which will be connected to each of the functional units 2. That is to say, when viewed in the up and down direction, a plurality of bundles, each containing three cables, keep parallel state each other and are arranged in a line, with keeping a space in between. Respective three cables, which are, as mentioned above, bound together with cable binding members 8, such as nylon binders, will be fixed to the first type of rod like supporting portion 20 or the second type of rod like supporting portion 21.

Like in Embodiment 1, the first type of rod like supporting portion 20 and the second type of rod like supporting portion 21 are disposed to follow the order of closeness to the functional unit 2, in such a way that a portion first closest to the functional unit 2 is assigned to the second type of rod like supporting portion 21 and a portion second closest to the functional unit 2 is assigned to the first type of rod like supporting portion 20. In the present embodiment, the second type of rod like supporting portion 21 is disposed, with keeping a space in between, on the right hand side of the functional unit 2 and is disposed to be parallel, in the back and forth direction. The first type of rod like supporting portion 20 is disposed, with keeping a space in between, on the right hand side of the second type of rod like supporting portion 21 and is disposed to be parallel, in the back and forth direction.

### 3. Embodiment 3

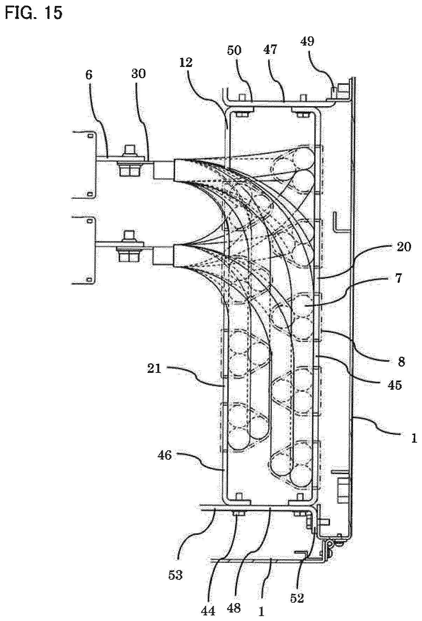

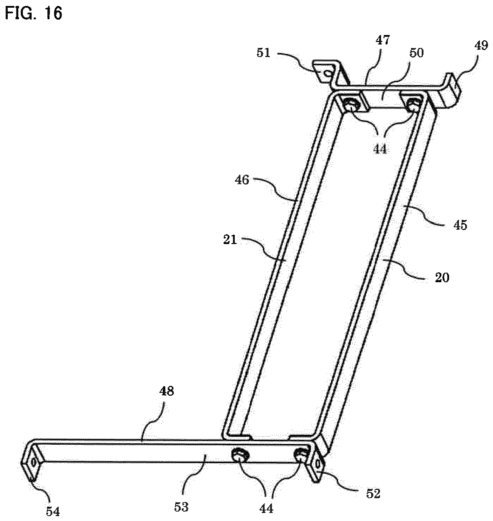

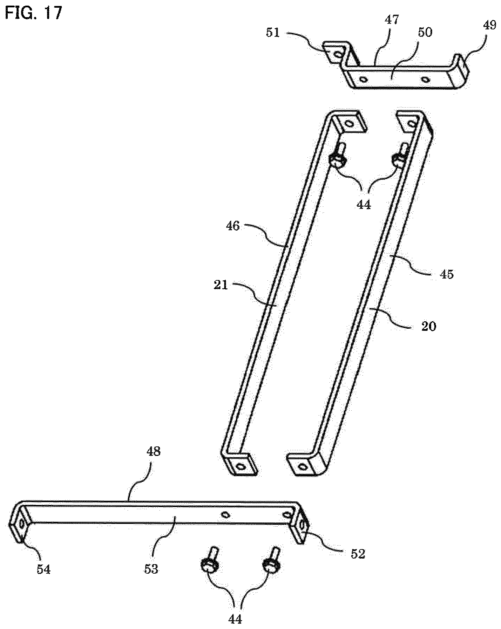

Next, explanation about a control center according to Embodiment 3 will be made with reference to drawings. Like FIG. 4 of Embodiment 1 and FIG. 13 of Embodiment 2, FIG. 15 is an enlarged drawing of a principal part. FIG. 16 is a perspective view of a cable supporting member 12 according to the present embodiment, where the cable supporting member is in an assembled state, and FIG. 17 is a perspective view of the cable supporting member 12 according the present embodiment, where the cable supporting member is in a disassembled state.

The description of constituent parts which are identical to or similar with those in Embodiment 2 will be omitted. Although the basic configurations of a control center according to the present embodiment are identical to or similar with those of Embodiment 2, they differ from Embodiment 2 in that each of the cable supporting members 12 is composed of a plurality of members which are bound together with fastening members 44.

In the present embodiment, each of the cable supporting members 12 is provided with a first type of rod like supporting member 45 which corresponds to the first type of rod like supporting portion 20; a second type of rod like supporting member 46 which corresponds to the second type of rod like supporting portion 21; a first interconnecting member 47 which connects between one end of the first type of rod like supporting member 45 and one end of the second type of rod like supporting member 46, and is fixed to the frame 1; a second interconnecting member 48, which connects between the other end of the first type of rod like supporting member 45 and the other end of the second type of rod like supporting member 46, and is fixed to the frame 1; and a plurality of fastening members 44 ( in the present case, bolts) which tie up between respective members.

According to the configurations mentioned above, since a plurality of members are employed as assembling parts to constitute a cable supporting member 12, members of simple form can be employed to a cable supporting member and reduction in the cost of the installation can be attained. Further, respective members of the cable supporting member 12 can be assembled in accordance with the attachment order of external connection cables 7, and then, facilitation in the assembling process can be attained. In addition, it becomes possible to disassemble members which are related with external connection cables 7 that will be removed at the time of maintenance and therefore, facilitation in the maintenance can be attained.

The first interconnecting member 47 is provided with a frame fixing portion 49 which will be fixed to the right hand portion of the frame 1, an extension portion 50 which extends from the frame fixing portion 49 to the functional unit 2 side ( the left hand side ), and a frame fixing portion 51 which is provided at the left hand side end of the extension portion 50. The frame fixing portion 49 is to be inserted into a hole which is formed in the frame 1, and the frame fixing portion 51 is to be fixed to the frame 1 with a bolt stop screw ( not shown ). One end ( a rear face end ) of the first type of rod like supporting member 45 and one end ( a rear face end ) of the second type of rod like supporting member 46 will be fastened to the extension portion 50 with fastening members 44.

The second interconnecting member 48 is provided with a frame fixing portion 52 which will be fixed to the right hand side portion of the frame 1, an extension portion 53 which extends from the frame fixing portion 52 to the functional unit 2 side ( the left hand side), and a frame fixing portion 54 which is provided at the left hand side end of the extension portion 53. The frame fixing portion 52 will be fixed to the frame 1 with a bolt stop screw and the frame fixing portion 54 will be fixed to the frame 1 with a bolt stop screw ( not shown ). The other end ( the front face end ) of the first type of rod like supporting member 45 and the other end ( the front face end ) of the second type of rod like supporting member 46 will be fastened to the extension portion 53 with fastening members 44.

The first type of rod like supporting member 45 and the second type of rod like supporting member 46 are defined as members of rod like shape which extend in the back and forth direction. Like the first type of rod like supporting portion 20 and the second type of rod like supporting portion 21 in Embodiment 2, the first type of rod like supporting portion 45 and the second type of rod like supporting member 46 are disposed to follow the order of closeness to the functional unit 2, in such a way that a member first closest to the functional unit 2 is assigned to the second type of rod like supporting member 46 and a member second closest to the functional unit 2 is assigned to the first type of rod like supporting member 45. In the present embodiment, the second type of rod like supporting member 46 is disposed, with keeping a space in between, on the right hand side of the functional unit 2, and is disposed to be parallel in the back and forth direction. The first type of rod like supporting member 45 is disposed, with keeping a space in between, on the right hand side of the second type of rod like supporting member 46 and is disposed to be parallel in the back and forth direction.

Since the configuration and arrangement of the external connection cables 7 which the first type of rod like supporting member 45 and the second type of rod like supporting member 46 support are identical to and similar with the configuration and arrangement of the external connection cables 7 which the first type of rod like supporting portion 20 and the second type of rod like supporting portion 21 of Embodiment 2 support, description is omitted.

### [ Other Embodiments ]

Lastly, other embodiments of the present disclosure will be explained. Each of the configurations of embodiments to be explained below is not limited to be separately utilized but can be utilized in combination with the configurations of other embodiments as long as no discrepancy occurs.

(1) In each of the above mentioned embodiments, there has been explained an exemplary case where the rod like supporting portion is composed of two kinds of rod like supporting portions; a first type of rod like supporting portion 20 which supports external connection cables 7 on a first row, and a second type of rod like supporting portion 21 which supports external connection cables 7 on a second row. However, embodiments according to the present application are not limited to the foregoing case. That is to say, the rod like supporting portion can be composed of three or more kinds of rod like supporting portion whose rows to support external connection cables 7 are different from each other. For example, the rod like supporting portion can be composed of three types of rod like supporting portion; a first type of rod like supporting portion which supports external connection cables on a first row, a second type of rod like supporting portion which supports external connection cables on a second row, and a third type of rod like supporting portion which supports external connection cables on a third row.
(2) In the above mentioned variation mode of Embodiment 1, which is explained using FIG. 7, there has been explained an exemplary case where the second type of rod like supporting portion 21 supports different rows of external connection cables 7 on the both sides thereof; and external connection cables 7 on a row which the second type of rod like supporting portion 21 supports on one side thereof and external connection cables on a row which the second type of rod like supporting portion 21 supports on the other side thereof are alternately disposed in the extending direction of the second type of rod like supporting portion 21, when viewed in the up and down direction. However, embodiments according to the present application are not limited to the foregoing case. That is to say, in each of the above mentioned embodiments, it is allowed that the first type of rod like supporting portion 20 is configured to support different rows of external connection cables 7 on the both sides thereof, and the external connection cables 7 are disposed alternately. In Embodiments 2 and 3, it is also allowed that the second type of rod like supporting portion 21 is configured to support different rows of external connection cables 7 on the both sides thereof, and the external connection cables 7 are disposed alternately.
(3) In each of the above mentioned embodiments, there has been explained an exemplary case where a plurality of external connection cables 7, which are bound together to form bundles, are arranged in a line, by the bundle unit of external connection cables 7 and are supported with the rod like supporting portion. However, embodiments according to the present application are not limited to the foregoing case. That is to say, it is allowed that the external connection cables 7 are arranged in a line, in units of a single cable, and are supported with the rod like supporting portion.

### REFERENCE SIGNS LIST

1 Frame ; 2 Functional Unit; 7 External Connection Cable ; 9 First Type of Cable Supporting Member; 10 Second Type of Cable Supporting Member; 11 Cable Supporting Member; 12 Cable Supporting Member; 20 First Type of Rod Like Supporting Portion ; 21 Second Type of Rod Like Supporting Portion ; 45 First Type of Rod Like Supporting Member; 46 Second Type of Rod Like Supporting Member; 47 First Interconnecting Member; 48 Second Interconnecting Member

## Claims

1. A control center, comprising;
a frame (1),
a plurality of functional units (2) disposed on a plurality of stages in an up and down direction and fixed to the frame (1), and
a plurality of external connection cables (7) extending in the up and down direction within the frame (1) of the control center and connecting each of the plurality of functional units (2) with an external device,
**characterized by** a cable supporting structure fixed to the frame (1) and supporting the external connection cables (7),
wherein the cable supporting structure has a rod like supporting portion with a rod like shape which supports the plurality of external connection cables (7) that are arranged in a line in a horizontal direction, with keeping parallel state each other, and extends in the horizontal direction, and
the rod like supporting portion is composed of plural kinds of rod like supporting portion (20, 21) whose rows of external connection cables to support are different from each other, and
respective kinds of rod like supporting portions (20, 21), which are provided in plural, are disposed, with keeping a space in between, in the up and down direction,
wherein the cable supporting structure is composed of plural kinds of cable supporting member (9, 10) which have one by one a kind of rod like supporting portion (20, 21), and
respective kinds of cable supporting members (9, 10), which are provided in plural, are disposed alternately, with keeping a space in between, in the up and down direction,
wherein the first type of cable supporting member (9) is provided with two frame fixing portions (24, 25) on the both ends thereof, and the first type of rod like supporting portion (20) is defined as a part which extends between the two frame fixing portions (24, 25),
wherein the second type of cable supporting member (10) is provided with two frame fixing portions (26, 27) on the both ends thereof and with two rod like extension portions (28, 29), which extend respectively from the two frame fixing portions (26, 27) to the functional unit (2) side, and the second type of rod like supporting portion (21) is defined as a part which extends between the functional unit (2) side ends of the two extension portions (28, 29), and
wherein the two frame fixing portions (26, 27) of the second type of cable supporting member (10) are disposed in a position so as to overlap respectively with the two frame fixing portions (24, 25) of the first type of cable supporting member (9), when viewed in the up and down direction.

2. A control center, comprising;
a frame (1),
a plurality of functional units (2) disposed on a plurality of stages in an up and down direction and fixed to the frame (1), and
a plurality of external connection cables (7) extending in the up and down direction within the frame (1) of the control center and connecting each of the plurality of functional units (2) with an external device,
**characterized by** a cable supporting structure fixed to the frame (1) and supporting the external connection cables (7),
wherein the cable supporting structure has a rod like supporting portion with a rod like shape which supports the plurality of external connection cables (7) that are arranged in a line in a horizontal direction, with keeping parallel state each other, and extends in the horizontal direction, and
the rod like supporting portion is composed of plural kinds of rod like supporting portion (20, 21) whose rows of external connection cables to support are different from each other, and
respective kinds of rod like supporting portions (20, 21), which are provided in plural, are disposed, with keeping a space in between, in the up and down direction,
wherein the cable supporting structure is composed of one kind of cable supporting member (12) which has all kinds of rod like supporting portions (20, 21), and
the cable supporting members (11, 12), which are provided in plural, are disposed, with keeping a space in between, in the up and down direction,
further wherein the one kind of cable supporting member (12) is configured to include
a plurality of rod like supporting members (45, 46) which constitute each of the plurality of rod like supporting portions (20, 21),
a plurality of interconnecting members (47, 48) which extend to the functional unit (2) side and which interconnect the ends of the plurality of rod like supporting members (45, 46) and are fixed to the frame (1), and fastening members (44) interconnecting the rod like supporting members (45, 46) and the interconnecting members (47, 48).

3. The control center according to claim 1 or 2,
wherein the respective kinds of rod like supporting portions (20, 21) are disposed to become parallel, with keeping a space in between, in the horizontal direction, when viewed in the horizontal direction, and
a row of external connection cables which one of two neighboring rod like supporting portions (20, 21) supports and a row of external connection cables which an other of the two neighboring rod like supporting portions (20, 21) supports are disposed in an empty space which is formed between the two neighboring rod like supporting portions (20, 21), when viewed in the up and down direction.

4. The control center according to claim 3,
wherein external connection cables on a row which the one of the two neighboring rod like supporting portions (20, 21) supports and external connection cables on a row which the other of the two neighboring rod like supporting portions (20, 21) supports are disposed alternately, with keeping a space in between, in an extending direction of the rod like supporting portion, when viewed in the up and down direction.

5. The control center according to claim 4,
wherein the rod like supporting portion (20, 21) supports different rows of external connection cables on both sides thereof, and
external connection cables on a row which the rod like supporting portion supports on one side thereof, and external connection cables on a row which the rod like supporting portion supports on an other side thereof are disposed alternately in the extending direction of the rod like supporting portion, when viewed in the up and down direction.

6. The control center according to any one of claims 1 to 5,
wherein the external connection cables (7) are arranged, by bundle unit of external connection cables, in a line and supported with the rod like supporting portion (20, 21), where a plural number of external connection cables, which are to be connected to each of the functional units (2), are bound together to form a bundle of external connection cables.

7. The control center according to claim 6,
wherein the external device is a three-phase alternating current motor, and
the functional unit (2) has an inverter which controls drive of the three-phase alternating current motor, and
the external connection cables (7) are arranged, by bundle unit of external connection cables, in a line and supported with the rod like supporting portion (20, 21), where three or four external connection cables, which connect the inverter in the functional unit and a three-phase coil of the three-phase alternating current motor, are bound together to form a bundle of external connection cables.

## Patentansprüche

1. Steuerzentrale, die aufweist;
ein Gestell (1),
eine Vielzahl von Funktionseinheiten (2), die auf einer Vielzahl von Stufen in einer Aufwärtsrichtung und einer Abwärtsrichtung angeordnet sind und die an dem Gestell (1) fixiert sind, und
eine Vielzahl von externen Verbindungskabeln (7), die sich in der Aufwärtsrichtung und Abwärtsrichtung innerhalb des Gestells (1) der Steuerzentrale erstrecken und die jede der Vielzahl von Funktionseinheiten (2) mit einer externen Vorrichtung verbinden,
**gekennzeichnet durch** eine Kabelhaltestruktur, die an dem Gestell (1) fixiert ist und die die externen Verbindungskabel (7) hält,
wobei die Kabelhaltestruktur einen stabartigen Halteabschnitt mit einer stabartigen Form aufweist, der die Vielzahl von externen Verbindungskabeln (7) hält, die in einer Linie in einer horizontalen Richtung angeordnet sind, wobei ein paralleler Zustand zueinander beibehalten wird, und der sich in der horizontalen Richtung erstreckt, und
wobei der stabartige Halteabschnitt aus mehreren Typen eines stabartigen Halteabschnitts (20, 21) gebildet wird, dessen Reihen von zu haltenden externen Verbindungskabeln sich voneinander unterscheiden, und
wobei jeweilige Typen von stabartigen Halteabschnitten (20, 21), die mehrfach vorgesehen sind, in der Aufwärtsrichtung und Abwärtsrichtung angeordnet sind, wobei dazwischen ein Abstand beibehalten wird,
wobei die Kabelhaltestruktur aus mehreren Typen von Kalbehaltegliedern (9, 10) gebildet wird, die jede für sich einen Typ von stabartigem Halteabschnitt (20, 21) aufweisen, und
wobei jeweilige Typen von Kalbehaltegliedern (9, 10), die mehrfach vorgesehen sind, abwechselnd in der Aufwärtsrichtung und Abwärtsrichtung angeordnet sind, wobei dazwischen ein Abstand eingehalten wird,
wobei der erste Typ eines Kabelhalteglieds (9) mit zwei Gestellfixierabschnitten (24, 25) an dessen beiden Enden vorgesehen ist, und wobei der erste Typ eines stabartigen Halteabschnitts (20) als ein Teil definiert ist, das sich zwischen den zwei Gestellfixierabschnitten (24, 25) erstreckt,
wobei der zweite Typ eines Kabelhalteglieds (10) mit zwei Gestellfixierabschnitten (26, 27) an dessen beiden Enden und mit zwei stabartigen Verlängerungsabschnitten (28, 29) vorgesehen ist, die sich jeweils von den zwei Gestellfixierabschnitten (26, 27) zur Seite der Funktionseinheit (2) erstrecken, und wobei der zweite Typ eines stabartigen Halteabschnitts (21) als ein Teil definiert ist, das sich zwischen den Enden, auf der Seite der Funktionseinheit (2), der zwei Verlängerungsabschnitte (28, 29) erstreckt, und
wobei die zwei Gestellfixierabschnitte (26, 27) des zweiten Typs eines Kabelhalteglieds (10) in einer Position angeordnet sind, so dass sie sich in der Aufwärtsrichtung und Abwärtsrichtung betrachtet jeweils mit den zwei Gestellfixierabschnitten (24, 25) des ersten Typs eines Kabelhalteglieds (9) überlappen.

2. Steuerzentrale, die aufweist;
ein Gestell (1),
eine Vielzahl von Funktionseinheiten (2), die auf einer Vielzahl von Stufen in einer Aufwärtsrichtung und Abwärtsrichtung angeordnet sind und die an dem Gestell (1) fixiert sind, und
eine Vielzahl von externen Verbindungskabeln (7), die sich in der Aufwärtsrichtung und Abwärtsrichtung innerhalb des Gestells (1) der Steuerzentrale erstrecken und die jede der Vielzahl von Funktionseinheiten (2) mit einer externen Vorrichtung verbinden,
**gekennzeichnet durch** eine Kabelhaltestruktur, die an dem Gestell (1) fixiert ist und die die externen Verbindungskabel (7) hält,
wobei die Kabelhaltestruktur einen stabartigen Halteabschnitt mit einer stabartigen Form aufweist, der die Vielzahl von externen Verbindungskabeln (7) hält, die in einer Linie in einer horizontalen Richtung angeordnet sind, wobei ein zueinander paralleler Zustand beibehalten wird, und der sich in der horizontalen Richtung erstreckt, und
wobei der stabartige Halteabschnitt aus mehreren Typen eines stabartigen Halteabschnitts (20, 21) gebildet wird, dessen Reihen von zu haltenden externen Verbindungskabeln sich voneinander unterscheiden, und
wobei jeweilige Typen von stabartigen Halteabschnitten (20, 21), die mehrfach vorgesehen sind, in der Aufwärtsrichtung und Abwärtsrichtung angeordnet sind, wobei dazwischen ein Abstand beibehalten wird,
wobei die Kabelhaltestruktur aus einem Typ eines Kabelhalteglieds (12) gebildet wird, das alle Typen von stabartigen Halteabschnitten (20, 21) aufweist, und
wobei die Kabelhalteglieder (11, 12), die mehrfach vorgesehen sind, in der Aufwärtsrichtung und Abwärtsrichtung angeordnet sind, wobei dazwischen ein Abstand beibehalten wird,
wobei ferner der eine Typ eines Kabelhalteglieds (12) eingerichtet ist, zu umfassen:
eine Vielzahl von stabartigen Haltegliedern (45, 46), die jeden der Vielzahl von stabartigen Halteabschnitten (20, 21) bilden,
eine Vielzahl von Zwischenverbindungsgliedern (47, 48), die sich zur Seite der Funktionseinheit (2) erstrecken und die die Enden der Vielzahl von stabartigen Haltegliedern (45, 46) miteinander verbinden und die an dem Gestell (1) fixiert sind, und
Befestigungsglieder (44), die die stabartigen Halteglieder (45, 46) und die Zwischenverbindungsglieder (47, 48) miteinander verbinden.

3. Steuerzentrale nach Anspruch 1 oder 2,
wobei die jeweiligen Typen von stabartigen Halteabschnitten (20, 21) so angeordnet sind, dass sie in der horizontalen Richtung parallel sind, wobei dazwischen ein Abstand beibehalten wird, wenn man es in der horizontalen Richtung betrachtet, und
wobei eine Reihe von externen Verbindungskabeln, die einen von zwei benachbarten stabartigen Halteabschnitten (20, 21) hält, und eine Reihe von externen Verbindungskabeln, die einen anderen der zwei benachbarten stabartigen Halteabschnitte (20, 21) hält, in einem leeren Raum angeordnet sind, der zwischen den zwei benachbarten stabartigen Halteabschnitten (20, 21) ausgebildet ist, wenn man es in der Aufwärtsrichtung und Abwärtsrichtung betrachtet.

4. Steuerzentrale nach Anspruch 3,
wobei externe Verbindungskabel in einer Reihe, die der eine der zwei benachbarten stabartigen Halteabschnitte (20, 21) hält, und externe Verbindungskabel in einer Reihe, die der andere der zwei benachbarten stabartigen Halteabschnitte (20, 21) hält, abwechselnd in einer Erstreckungsrichtung des stabartigen Halteabschnitts angeordnet sind, wobei dazwischen ein Abstand beibehalten wird, wenn man es in der Aufwärtsrichtung und Abwärtsrichtung betrachtet.

5. Steuerzentrale nach Anspruch 4,
wobei der stabartige Halteabschnitt (20, 21) unterschiedliche Reihen von externen Verbindungskabeln an dessen beiden Seiten hält, und
externe Verbindungskabel in einer Reihe, die der stabartige Halteabschnitt auf seiner einen Seite hält, und externe Verbindungskabel in einer Reihe, die der stabartige Halteabschnitt auf seiner anderen Seite hält, abwechselnd in der Erstreckungsrichtung des stabartigen Halteabschnitts angeordnet sind, wenn man es in der Aufwärtsrichtung und Abwärtsrichtung betrachtet.

6. Steuerzentrale nach einem der Ansprüche 1 bis 5,
wobei die externen Verbindungskabel (7), durch eine Bündelungseinheit von externen Verbindungskabeln, in einer Linie angeordnet sind und durch den stabartigen Halteabschnitt (20, 21) gehalten werden,
wobei eine Mehrzahl von externen Verbindungskabeln, die mit jeder der Funktionseinheiten (2) zu verbinden sind, zusammengebunden sind, um ein Bündel von externen Verbindungskabeln zu bilden.

7. Steuerzentrale nach Anspruch 6,
wobei die externe Vorrichtung ein dreiphasiger Wechselstrommotor ist, und die Funktionseinheit (2) einen Wechselrichter aufweist, der eine Ansteuerung des dreiphasigen Wechselstrommotors steuert, und
die externen Verbindungskabel (7), durch eine Bündelungseinheit von externen Verbindungskabeln, in einer Linie angeordnet sind und durch den stabartigen Halteabschnitt (20, 21) gehalten werden, wobei drei oder vier externe Verbindungskabel, die den Wechselrichter in der Funktionseinheit und eine dreiphasige Spule des dreiphasigen Wechselstrommotors verbinden, zusammengebunden sind, um ein Bündel von externen Verbindungskabeln zu bilden.

## Revendications

1. Centre de commande, comprenant ;
un cadre (1),
une pluralité d'unités fonctionnelles (2) disposées sur une pluralité d'étages dans une direction haut et bas et fixées au cadre (1), et
une pluralité de câbles de connexion externes (7) s'étendant dans la direction haut et bas à l'intérieur du cadre (1) du centre de commande et connectant chaque unité de la pluralité d'unités fonctionnelles (2) à un dispositif externe,
**caractérisé par** une structure de support de câble fixée au cadre (1) et supportant les câbles de connexion externes (7),
la structure de support de câble ayant une portion de support en profil de tige avec un profil de type tige qui supporte la pluralité de câbles de connexion externes (7) qui sont agencés dans une ligne dans une direction horizontale, en gardant un état parallèle l'un à l'autre, et s'étend dans la direction horizontale, et
la portion de support de type tige est composée de plusieurs sortes de portions de support en forme de tige (20, 21) dont les rangées de câbles de connexion externes à supporter sont différentes l'une de l'autre, et
des sortes respectives de portions de support en forme de tige (20, 21), dont plusieurs sont fournies, sont disposées, en gardant un espace entre elles, dans la direction haut et bas,
la structure de support de câble étant composée de plusieurs sortes d'éléments de support de câble (9, 10) qui ont un par un une sorte de portion de support de type tige (20, 21), et
des sortes respectives de portions d'éléments de support de câble (9, 10), dont plusieurs sont disposées, sont disposées en alternance, en gardant un espace entre elles, dans la direction haut et bas,
la première sorte d'élément de support de câble (9) étant pourvue de deux portions de fixation de cadre (24, 25) sur ses deux extrémités, et la première sorte de portion de support de type tige (20) étant définie comme une partie qui s'étend entre les deux portions de fixation de cadre (24, 25),
la deuxième sorte d'élément de support de câble (10) étant pourvue de deux portions de fixation de cadre (26, 27) sur ses deux extrémités et de deux portions d'extension de type tige (28, 29), qui s'étendent respectivement à partir des deux portions de fixation de cadre (26, 27) vers le côté unité fonctionnelle (2), et la deuxième sorte de portion de support de type tige (21) étant définie comme une partie qui s'étend entre les extrémités latérales du côté unité fonctionnelle (2) des deux portions d'extension (28, 29), et
les deux portions de fixation de cadre (26, 27) de la deuxième sorte d'élément de support de câble (10) étant disposées dans une position de façon à chevaucher respectivement les deux portions de fixation de cadre (24, 25) de la première sorte d'élément de support de câble (9), lorsque vues dans la direction haut et bas.

2. Centre de commande, comprenant ;
un cadre (1),
une pluralité d'unités fonctionnelles (2) disposées sur une pluralité d'étages dans une direction haut et bas et fixées au cadre (1), et
une pluralité de câbles de connexion externes (7) s'étendant dans la direction haut et bas à l'intérieur du cadre (1) du centre de commande et connectant chaque unité de la pluralité d'unités fonctionnelles (2) à un dispositif externe,
**caractérisé par** une structure de support de câble fixée au cadre (1) et supportant les câbles de connexion externes (7),
la structure de support de câble ayant une portion de support en forme de tige avec un profil de type tige qui supporte la pluralité de câbles de connexion externes (7) qui sont agencés dans une ligne dans une direction horizontale, en gardant un état parallèle l'un à l'autre, et s'étend dans la direction horizontale, et
la portion de support de type tige est composée de plusieurs sortes de portions de support en forme de tige (20, 21) dont les rangées de câbles de connexion externes à supporter sont différentes l'une de l'autre, et
des sortes respectives de portions de support en forme de tige (20, 21), dont plusieurs sont fournies, sont disposées, en gardant un espace entre elles, dans la direction haut et bas,
la structure de support de câble étant composée d'une sorte d'élément de support de câble (12) qui a toutes sortes de portions de support en forme de tige (20, 21), et
les éléments de support de câble (11, 12), dont plusieurs sont fournis, sont disposés, en gardant un espace entre eux, dans la direction haut et bas,
en outre, la sorte d'élément de support de câble (12) étant configurée pour inclure une pluralité d'éléments de support de type tige (45, 46) qui constituent chaque portion de la pluralité de portions de support de type tige (20, 21),
une pluralité d'éléments d'interconnexion (47, 48) qui s'étendent vers le côté unité fonctionnelle (2) et qui connectent entre elles les extrémités de la pluralité d'éléments de support de type tige (45, 46) et sont fixés au cadre (1), et
des éléments d'assujettissement (44) connectant les éléments de support en forme de tige (45, 46) et les éléments d'interconnexion (47, 48).

3. Centre de commande selon la revendication 1 ou la revendication 2,
les sortes respectives de portions de support de type tige (20, 21) étant disposées de façon à devenir parallèles, en gardant un espace entre elles, dans la direction horizontale, lorsque vues dans la direction horizontale, et
une rangée de câbles de connexion externes qu'une des deux portions de support en forme de tige voisines (20, 21) supporte et une rangée de câbles de connexion externes qu'une autre des deux portions de support en forme de tige voisines (20, 21) supporte sont disposées dans un espace vide qui est formé entre les deux portions de support en forme de tige voisines (20, 21), lorsque vues dans la direction haut et bas.

4. Centre de commande selon la revendication 3,
des câbles de connexion externes sur une rangée que l'une des deux portions de support de type tige voisines (20, 21) supporte et des câbles de connexion externes sur une rangée que l'autre des deux portions de support de type tige voisines (20, 21) supporte sont disposés en alternance, en gardant un espace entre eux, dans une direction d'extension de la portion de support de type tige, lorsque vus dans la direction haut et bas.

5. Centre de commande selon la revendication 4,
la portion de support de type tige (20, 21) supportant différentes rangées de câbles de connexion externes sur ses deux côtés, et
des câbles de connexion externes sur une rangée sur laquelle la portion de support de type tige supporte sur un côté de celui-ci, et des câbles de connexion externes sur une rangée que la portion de support de type tige supporte sur un autre côté de celle-ci sont disposés en alternance dans la direction d'extension de la portion de support de type tige, lorsque vus dans la direction haut et bas.

6. Centre de commande selon l'une quelconque des revendications 1 à 5,
les câbles de connexion externes (7) étant agencés, par une unité de faisceau de câbles de connexion externes, dans une ligne et supportés par la portion de support en forme de tige (20, 21), où une pluralité de câbles de connexion externes, qui doivent être connectés à chacune des unités fonctionnelles (2), sont liés ensemble pour former un faisceau de câbles de connexion externes.

7. Centre de commande selon la revendication 6,
le dispositif externe étant un moteur à courant alternatif triphasé, et
l'unité fonctionnelle (2) ayant un onduleur qui commande l'entraînement du moteur à courant alternatif triphasé, et
les câbles de connexion externes (7) sont agencés, par unité de faisceau de câbles de connexion externes, dans une ligne et supportés par la portion de support de type tige (20, 21), trois ou quatre câbles de connexion externes, qui connectent l'onduleur dans l'unité fonctionnelle et une bobine triphasée du moteur à courant alternatif triphasé, sont liés ensemble pour former un faisceau de câbles de connexion externes.
